# EUROPEAN PATENT SPECIFICATION

(11) **EP 0 906 863 B1**
(45) Date of publication and mention of the grant of the patent: **16.03.2005**
(21) Application number: 98118216.5
(22) Date of filing: 25.09.1998
(51) Int. Cl.: B62D 65/00, B62D 25/10

(54) **Panel mounting system of a vehicle**
Befestigungsvorrichtung eines Fahrzeugpaneels
Système de montage de panneau pour véhicule

(30) Priority: 02.10.1997 JP 26997297; 09.10.1997 JP 27770497
(43) Date of publication of application: 07.04.1999
(73) Proprietor: KANZAKI KOKYUKOKI MFG. CO., LTD., Amagasaki-Shi, Hyogo-Ken (JP)
(72) Inventor: Tsuda, Toshio, Amagasaki-shi, Hyogo-ken (JP); Harada, Shigeo, Amagasaki-shi, Hyogo-ken (JP); Nagata, Hiroyasu, Amagasaki-shi, Hyogo-ken (JP)
(74) Representative: Henkel, Feiler & Hänzel

(56) References cited:
- PATENT ABSTRACTS OF JAPAN vol. 010, no. 115 (M-474), 30 April 1986 (1986-04-30) & JP 60 244676 A (ISEKI NOKI KK), 4 December 1985 (1985-12-04)
- PATENT ABSTRACTS OF JAPAN vol. 1996, no. 01, 31 January 1996 (1996-01-31) & JP 07 242183 A (KUBOTA CORP), 19 September 1995 (1995-09-19)

## Description

### Background of the Invention

### Field of the Invention

The present invention is related to a mounting system of front and side panels, which together with a hood enclose an engine.room of a vehicle, particularly a tractor for agriculture or other general utility.

### Related Art

Conventionally, a working vehicle like an agricultural or mowing tractor is provided in its engine room with a radiator, a cooling fan, an engine and the like. The engine room is covered at the top thereof with a hood and is enclosed at the front and both sides thereof by front and side panels respectively. The hood and panels are respectively openable and detachable for maintenance and repair.

Japanese Patent No. Hei 7-242,183 describes a structure that side panels are easily removably mounted. In the structure, each side panel is provided with an engaging projection and corresponding U-like shaped spring means is provided on a vehicle body frame, so that the side panel is anchored onto the body frame by inserting the engaging projection into the spring means. Thus, the side panel can be attached and detached by laterally inserting and removing the engaging projection. However, it comes to sway thereby tending to be detached in proportion to increase of abrasion of the spring means and reduction of elasticity thereof. During travelling of the vehicle having such swaying side panels, uncomfortable vibration is generated, thereby being hard to control. Also, in the worst case, the side panels move laterally to be off and fall, thereby being subject to damage or deformation. There is a similar case causing about front panel.

A panel mounting system with the features of the preamble portion of Claim 1 is known from JP 60 244 676 A.

The present invention is to provide a panel mounting system (for mounting a front panel and or side panels) such that engaging portions thereof are free from abrasion or deformation by long-term use and panels can be attached and detached by one-touch simple operation without an implement and can be checked in their shaking.

Aiming at this object, the invention provides a panel mounting system as defined by Claim 1.

With those and other objects in view, the present invention consists in the construction hereinafter fully described, illustrated in the accompanying drawings, and set forth in the claims hereto appended.

### Brief Description of the Figures

Fig. 1 is a side view of a tractor as a whole in accordance with the present invention;
Fig. 2 is a plan view of an interior of a bonnet;
Fig. 3 is a sectional view in the direction of the arrows X-X in Fig. 2;
Fig. 4 is a front view of the interior of the bonnet centering a close-locking mechanism therein.
Fig. 5 is a side view of the interior of the bonnet;
Fig. 6 is a perspective view of the bonnet from which side panels are removed;
Fig. 7 is a sectional front view of engaging and engaged portions of the side panel and a body frame.
Fig. 8 is a sectional side view of the bonnet when a hood is opened, and
Fig. 9 is a perspective view of attaching portion of a guide rail.

### Detailed Description of the Preferred Embodiments

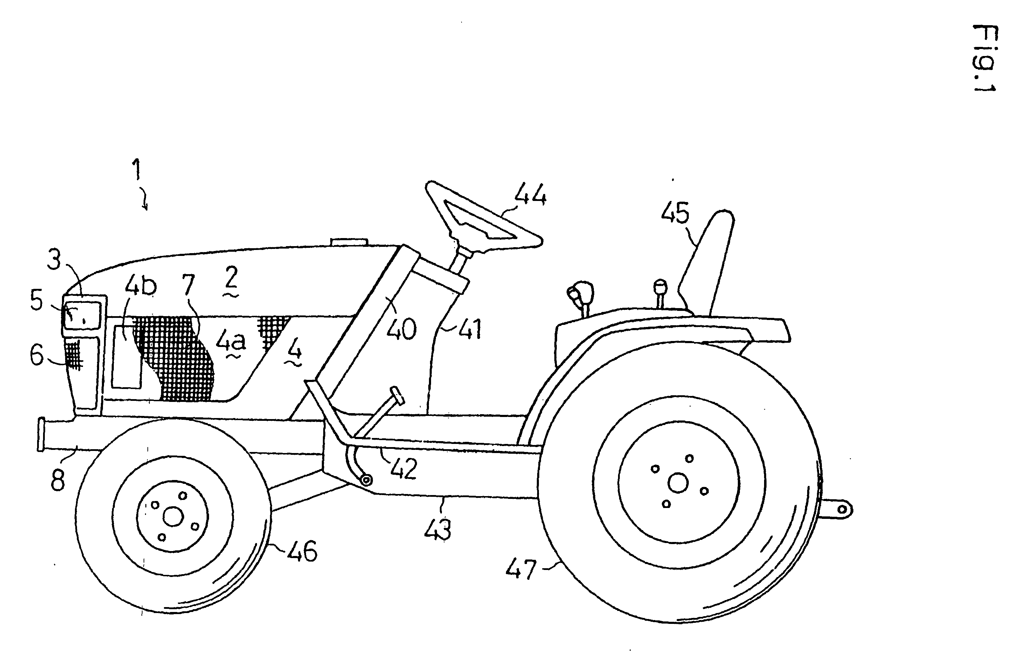

The whole structure of a tractor of the present invention will now be described with particular reference to Fig. 1. Left and right parallel horizontal frames 8 are extended longitudinally forward from a body frame 43 including a clutch system, a transmission and the like. Left and right front wheels 46 are supported respectively below horizontal frames 8. Also, left and right rear wheels 47 are supported on the left and right sides of the transmission disposed on the rear end of body frame 43.

Approximately horizontal steps 42 are provided respectively on the left and right sides of body frame 43. On the rear portion of body frame 43 is mounted a seat 45 and on the front portion of body frame 43 is mounted a dashboard 41 on which a steering wheel 44 is provided. An arcuate first upright frame 40 is rearward-slantingly erected on horizontal frames 8 in front of steps 42 so as to support a dashboard 41.

A resinous fuel tank 37 is provided under first upright frame 40. Ribs 37a integrally formed on both side surfaces of fuel tank 37 are fixed on stays 40a which are respectively provided at front ends of left and right vertical portions of first upright frame 40.

On horizontal frames 8 is disposed a bonnet 1 containing an engine 13 and the like, which consists of an engine hood 2, a front panel 3 and both left and right side panels 4. Engine 13 is enclosed at the both sides and the front thereof respectively with side panels 4 and front panel 3 and is covered at the top thereof with hood 2.

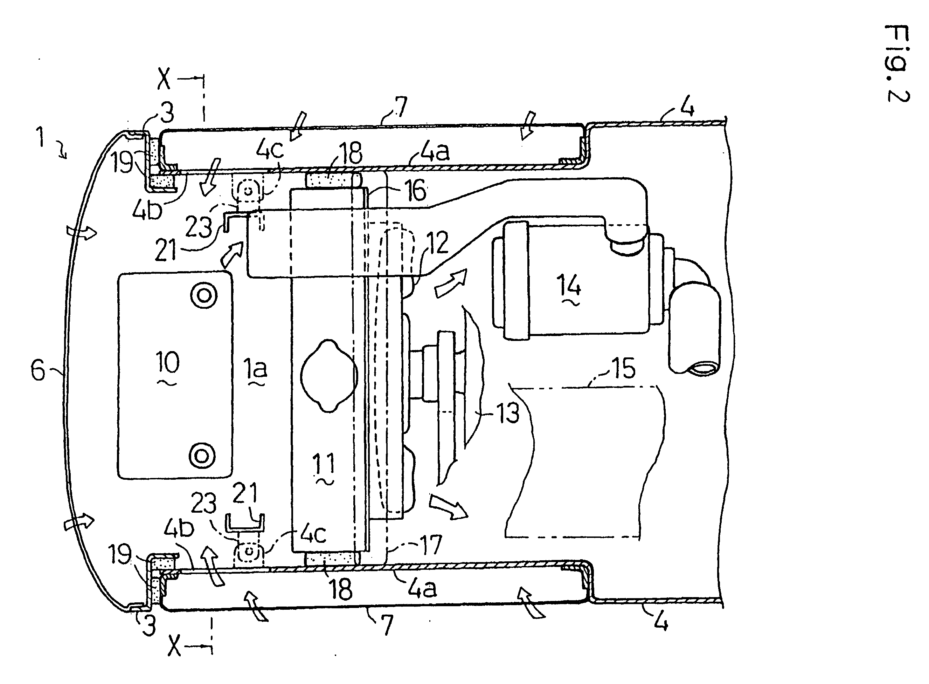

An inner structure of bonnet 1 will be described with particular reference to Figs. 2 through 5. A bottom plate 9 is spread over front portions of horizontal frames 8. A battery 10 is mounted upon a front upper surface 9b of bottom plate 9. A radiator 11 is erected on a rear upper surface 9c of bottom plate 9. A cooling fan 12 for supplying cooling air to the rear portion of a vehicle is disposed behind radiator 11. Behind cooling fan 12 is supported an engine 13 on left and right horizontal frames 8 so as to be vibration-isolated. An air cleaner 14 and a muffler 15 are laterally juxtaposed above engine 13.

A blocking plate 16 is fixedly interposed between radiator 11 and cooling fan 12. A sealing member 17 made of urethane, rubber or the like is stuck to the upper and both lateral inner surfaces of hood 2 so as to fill up the gap between blocking plate 16 and closed hood 2. Also, sealing members 18 are respectively stuck to both outer side surfaces of radiator 11 so as to abut each sealing members 18 against the inner surface of each side panel 4 when side panels 4 are mounted. Thus, radiator 11, blocking plate 16, sealing member 17 and sealing members 18 define a partition dividing the interior of bonnet 1 before and behind.

An assembly structure of bonnet 1 will be described with particular reference to Figs. 1 through 7. Front panel 3 is provided at the upper left and right portions thereof with headlights 5. The lower portion thereof below headlights 5 is formed into a grille covered with a first dustproof net 6. A longitudinal recessed portion 4a covered with a second dustproof net 7 is formed on the outside surface of each side panel 4. A grille 4b is open at the rather front area of recessed portion 4a.

The structure of front panel 3 will be described. Front panel 3 is provided on each of the upper and lower portions thereof with one or more inlet means or retaining means. In this embodiment, on the left and right upper portions thereof are provided respective backward-extending segments 3a having respective through holes and on the left and right lower end portions thereof are provided respective downward-projecting dowels 3b.

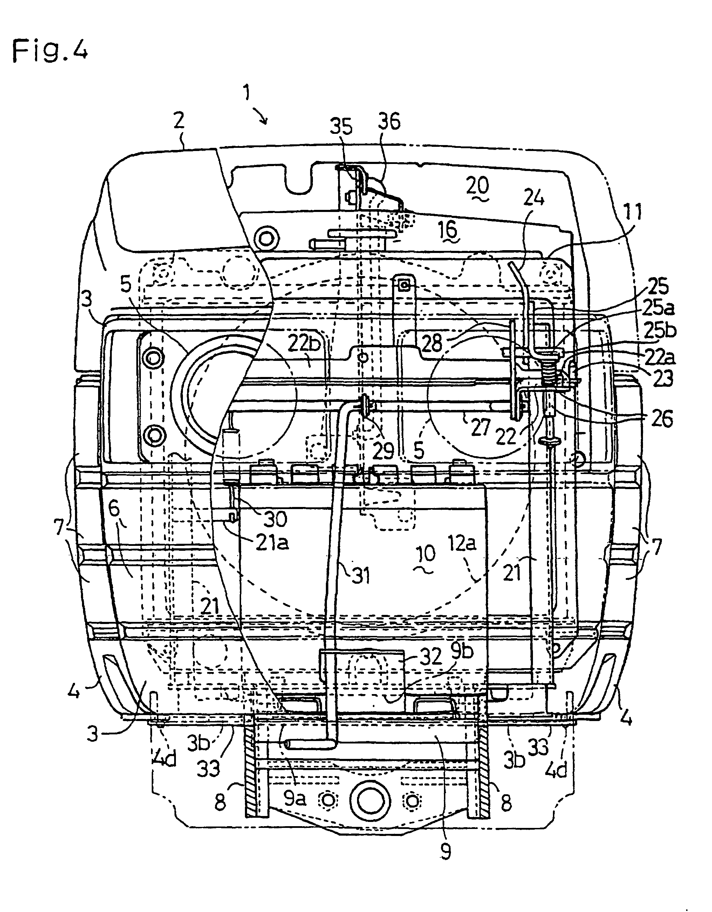

On the other hand, holes 9a (or grooves 9a as shown in Fig. 4) corresponding to respective dowels 3b are bored in front upper surface 9b of bottom plate 9. Furthermore, on rear upper surface 9c are erected a pair of left and right second upright frames 21 in front of radiator 11. Thus, in front of body frame 43 is constructed a frame structure for supporting bonnet 1 comprising left and right horizontal frames 8, first upright frame 40, left and right second upright frames 21 and bottom plate 9. First upright frame 40 constitutes a frame portion of the frame structure, which supports dashboard 41. Left and right second upright frames 21 constitute a frame portion of the frame structure, which is adjacent to the front end of the vehicle.

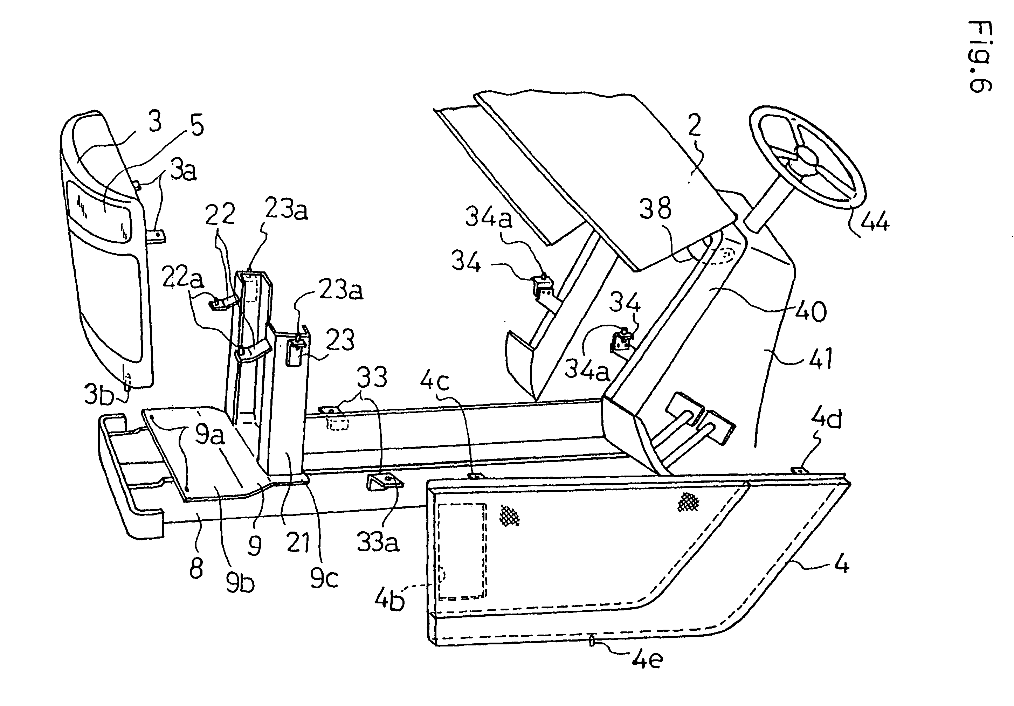

Approximately horizontal forward extending segments 22 are provided on the upper front surfaces of respective second upright frames 21. Segments 22 are separated from each other in the embodiment shown in Fig. 6, however, they may be integrally connected with each other through lateral frame 22b fixed onto the front ends of second upright frames 21 as shown in Fig. 4. Pins 22a project upward from respective front portions of segments 22. The vertical length of pin 22a is longer than that of dowel 3b for ensuring a clearance between dowel 3b and hole 9a during insertion of pin 22a in segment 3a. In this regard, the vertical distance between segments 3a and the lower end of front panel 3 is identical with that between segments 22 and front upper surface 9b.

For mounting front panel 3 in this arrangement, it is lowered along the front end of second upright frames 21. During lowering front panel 3, at first, pins 22a enter the holes of respective segments 3a, secondly, dowels 3b enter respective holes 9a and at last, segments 3a and the lower end of front panel 3 fit on segments 22 and front upper surface 9b of bottom plate 9 respectively. Thus, the installation of front panel 3 can be completed easily. Mounted front panel 3 is checked in its longitudinal and lateral movement by engaging the inlets (pins 22a and dowels 3b) in the retainers (segments 22 and bottom plate 9 with holes 9a).

Next, the mounting structure of side panels 4 will be described. Each side panel 4 is provided on each of the upper and lower end portions thereof with one or more inlets or retainers. In this embodiment, on the front and rear upper end thereof are respectively provided a front segment 4c and a rear segment 4d, which project laterally inward and are provided with respective through holes, and on the horizontal lower end edge thereof is provided a downward-projecting pin 4e.

On the other hand, a first segment 23 and a third segment 33 are provided on the respective lateral outside surfaces of each first upright frame 21 and each horizontal frame 8 so as to project laterally outward. Second segments 34 are respectively provided on the left and right outside surfaces of first upright frame 40, so as to project laterally outward.

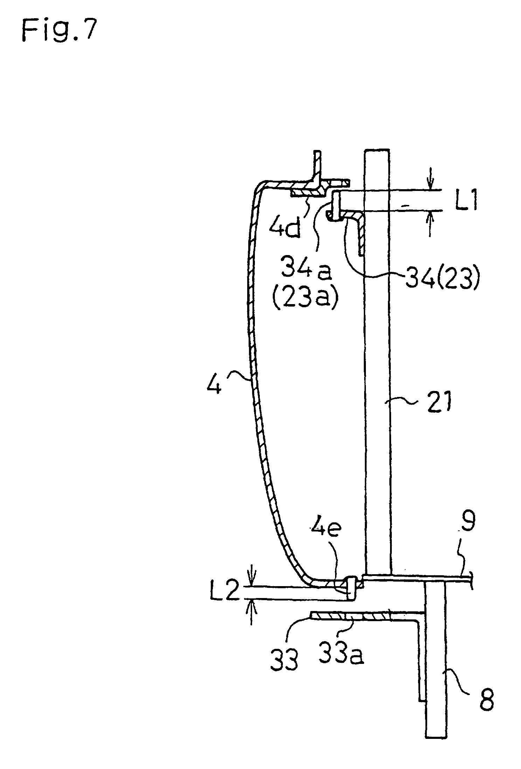

On first and second segments 23 and 34 are respectively provided upwardly projecting pins 23a and 34a. Third segment 33 is provided with hole 33a. As shown in Fig. 7, the vertical length L1 of pins 23a and 34a is longer than the vertical length L2 of pin 4e for ensuring a clearance between pin 4e and third segment 33 during insertion of pins 23a and 34a in segments 4c and 4d. In this regard, the vertical length of side panel 4 is identical with the vertical distance between first and second segments 23 and 34 and third segment 33.

Alternatively, a plurality of pins 4e may be provided before and behind on the lower end edge of each side panel 4. In this case, a . plurality of segments 33 are provided on the outside surface of each horizontal frame 8 correspondingly.

For mounting side panels 4, they are respectively lowered along the lateral outside surfaces of first and second upright frames 21 and 40. During lowering each side panel 4, at first pins 23a and 34a enter the holes of respective segments 4c and 4d, secondly pin 4e enters hole 33a and at last segments 4c and 4d and the lower end edge of side panel 4 fit on respective segments 23, 34 and 33. Thus, the installation of side panel 4 can be completed easily. Mounted side panel 4 is checked in its longitudinal and lateral movement by engaging the inlets (pins 23a, 34a and 4e) in the retainers (segments 4c, 4d and 33).

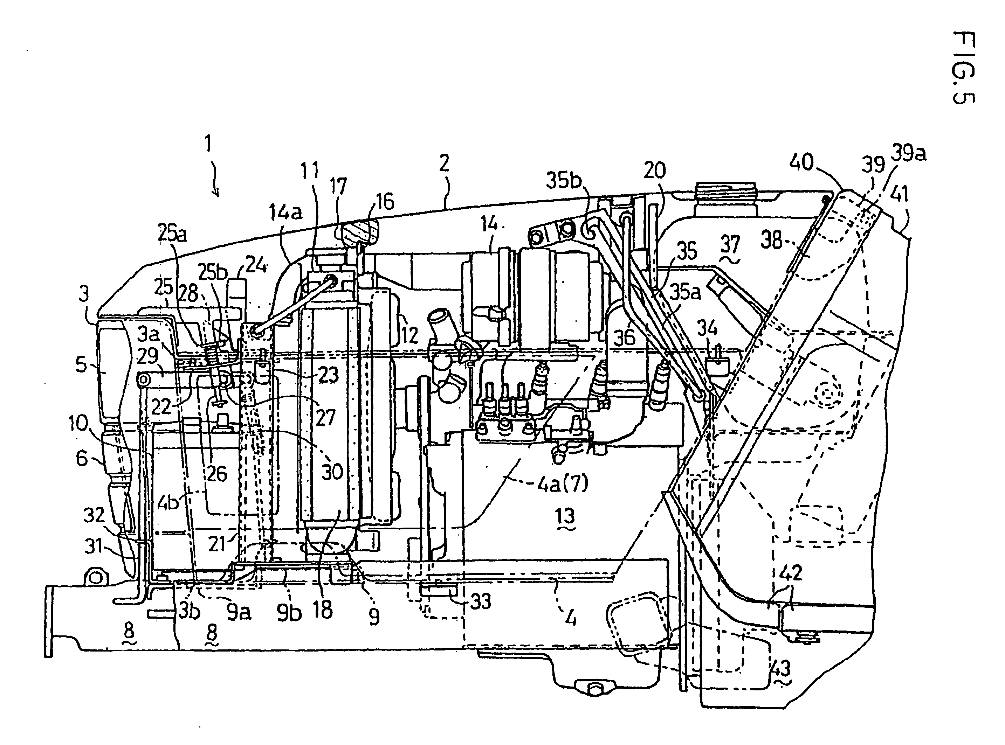

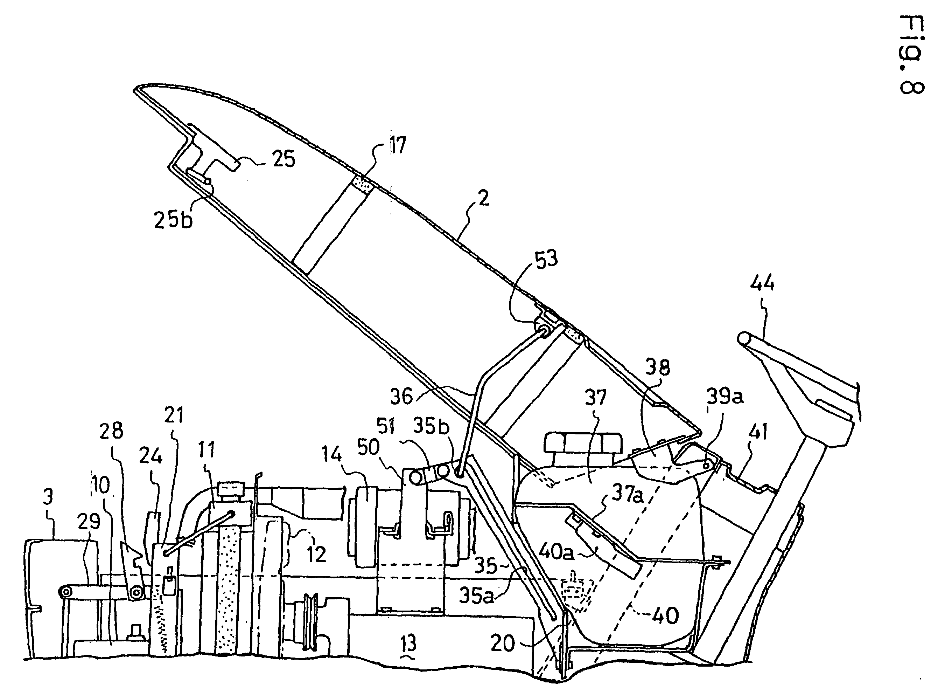

Referring to Figs. 5, 6 and 8, left and right hinges 38 provided on the rear end of hood 2 are pivoted on respective pivotal pin 39a of left and right hinge stays 39 fixed onto the upper portion of first upright frame 40, thereby enabling hood 2 to be vertically rotated. For locking closed hood 2, a close-locking mechanism is provided on said second upright frames 21. Also, for locking opened hood 2, an open-locking mechanism consisting of a guide rail 35 and a stand rod 36 are constructed in the upper space behind engine 13.

The close-locking mechanism will be described with Figs. 4 and 5. Guide members 24 project upward from respective second upright frames 21. Locking members 25 are fixed left and right to the the front portion of hood 2, so as to slide down along respective guide members 24 during lowering of the front end of hood 2 for closing. An upward biased spring 26 is mounted on each segment 22 behind its pin 22a. Each locking member 25 is provided with a downwardly-projecting pressing portion 25a. When closing hood 2, springs 26 are compressed by respective pressing portions 25a, thereby absorbing shock in shutting of engine hood 2.

On the lower rear end of pressing member 25a is laterally fixed a locking pin 25b. Left and right hook members 28 are integrally attached to the vicinity of lateral ends of a shaft 27 rotatably spanned between left and right segments 22, thereby enabling hook members 28 to be longitudinally rotated together with rotation of shaft 27. A spring stay extends rearward from shaft 27 at the vicinity of its one end. A spring stay 21a projects from second upright frame 21 of the same side with the spring stay of shaft 27. A spring 30 is stretched between the spring stay of shaft 27 and spring stay 21a, so as to bias hook members 28 clockwise when viewed in Fig. 5.

As explained above, during lowering of the front end of hood 2, locking members 25 slide down along respective lateral surfaces of guide members 24 and locking pins 25b are pushed against respective cams formed on free ends of hook members 28 so as to rotate hook members 28 forward against biasing of springs 30. At last, locking pins 25b are engaged in respective recessed portions of hook members 28 and hook members 28 are rotated rearward to the original positions thereof. Thus, locking of closed hood 2 is completed.

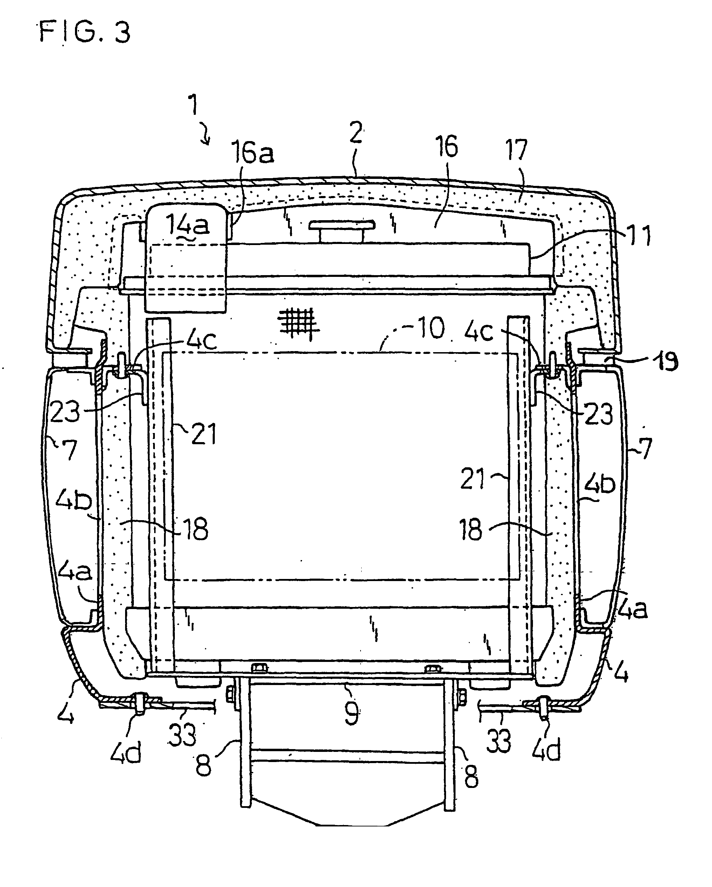

As shown in Fig. 5, the front lower end of such locked closed hood 2 suppress the upper end edge of front panel 3 so as to check vertical movement of front panel 3. Also, as shown in Fig. 3, such hood 2 suppress the upper end edges of both side panels 4 through sealing members 19 stuck to the lower end edges of both sides of hood 2 so as to check vertical movement of side panels 4. Thus, front panel 3 and side panels 4 are prevented from falling out as long as hood 2 is locked in closing.

Next, Explanation will be given on a releasing mechanism for locked closed hood 2. A rotating arm 29 extends forward from the vicinity of lateral center of shaft 27. The front end of rotating arm 29 pivotally supports the top end of a lock-releasing lever 31. Lever 31 extends downward to below the lower end of front panel 3 through a lever guide 32 fixedly mounted on front upper surface 9b of bottom plate 9 and bends forward between horizontal frames 8 for forming a grip thereof. Once an operator inserts his hand into below front panel 3 and push down lock-releasing lever 31, the front end of arm 29 is rotated downward and hook members 28 are integrally rotated forward so that locking pins 25b slip off and locked hood 2 is released. When an operator lifts up the front end of hood 2 in this condition, hood 2 opens upward on pivotal shafts 39a of hinges 38 as a fulcrum.

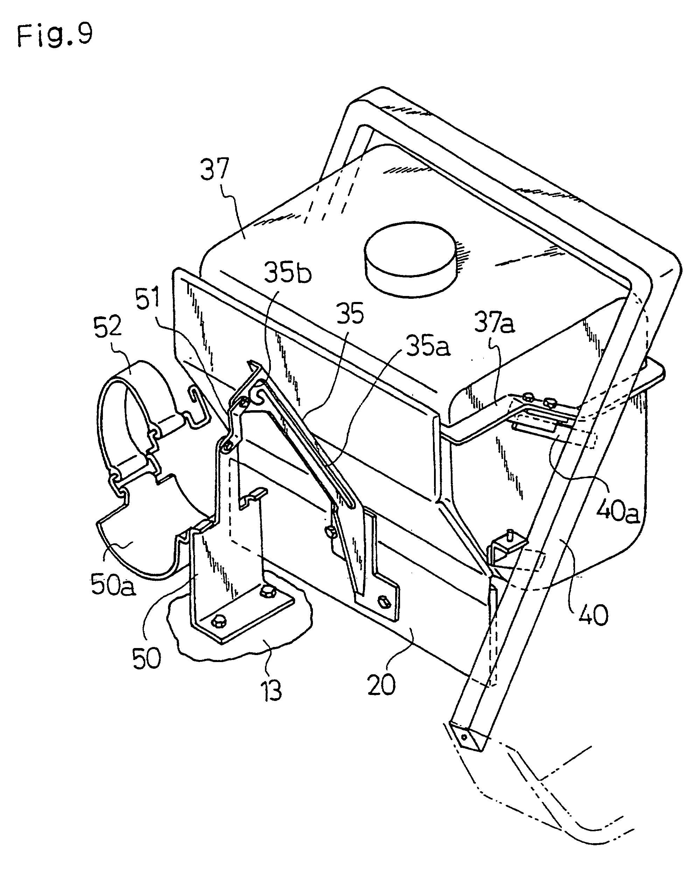

The open-locking mechanism for locking such opened hood 2 will be described with particular reference to Figs. 4, 5, 8 and 9. A hot air blocking plate 20 disposed along front surface of a fuel tank 37 in the rear area of the engine room is attached to the lower portion of first upright frame 40. The lower portion of guide rail 35 is fixed to the lower center portion of plate 20. The upper portion of guide rail 35 is slantingly extended upwardly forward and is bored through with a guide slot 35a along the longitudinal direction thereof. The upper end of guide slot 35a is formed into a hook portion 35b, which is C-like shaped when viewed in side. In this embodiment, guide slot 35a is provided with only one locking portion 35b, however, it is possible to form one or more additional hook portions 35b in halfway of guide slot 35a. Guide slot 35a provided with a plurality of hook portions 35b enables opening hood 2 to be locked at several levels.

The top end of guide rail 35 is secured to an upper end of a support bracket 50 erected on engine 13 via stay 51, thereby improving the strength of hot air blocking plate 20. Also, such an arrangement makes plate 20 integrally connected with engine 13, thereby reducing vibration of plate 20 so as to stabilize opening hood 2. Support bracket 50 is joined with a half-divided cylindrical retaining plate 50a, so that an air cleaner 14 is tied onto retaining plate 50a by band 52.

On the other hand, a pivotal support stay 53 projects downward from the inner surface of rear center portion of hood 2. A cranked upper end of stand rod 36 is inserted into pivotal support stay 53 so as to pivotally hang stand rod 36. While hood 2 is opened, the pivotal portion (pivotal support stay 53) is positioned behind hook portion 35b of guide slot 35a, thereby approaching pivotal pins 39a as the centre of rotation of hood 2. Thus, hood 2 can be wide open in spite of short stand rod 36.

The lower end of stand rod 36, which is also cranked, is inserted into guide slot 35a so as to be slidably cramped therein. Stand rod 36 is doglegged so that the lower half thereof extends rearward, whereby it can be contained as possible as compact without interference with fuel tank 37 and plate 20 in the engine room when hood 2 is shut.

During lift of the front end of hood 2 for opening, the lower end of stand rod 36 slides upwardly in guide slot 35a. At last, when hood 2 reaches its opening limit position, an operator pulls the lower end of stand rod 36 frontward so as to engage it in hook portion 35b and slightly lowers the front end of hood 2, whereby stand rod 36 is stretched between pivotal support stay 53 and hook portion 35b so that hood 2 is locked in opening. Such easy engaging the free lower end of stand rod 36 into hook portion 35b is only required operation for locking open hood 2.

In state that open hood 2 is locked, the various parts in the engine room of bonnet 1 can be maintained and also mounted front and side panels 3 and 4 can be easily removed from the vehicle body by only pulling them up because the inlets of panels 3 and 4 naturally slip out from the retainers thereof by such pulling.

For shutting locked open hood 2, at first hood 2 is lifted slightly, whereby stand rod 36 is lifted accordingly so that the lower end thereof comes out of hook portion 35b and enters guide slot 35a. Then, hood 2 is lowered, so that the lower end of stand rod 36 descends along guide slot 35a and at last, hood 2 is closed through the above close-locking mechanism.

## Claims

1. A panel mounting system of a vehicle comprising:
a substantially vertically projecting inlet (3a,3b,4c,4d,4e) or a retainer (9a,22a,23a,33a,34a) as engaged means provided on each of vertically upper and lower positions of a frame structure (8,9,21,40) of a vehicle;
a panel (3,4) provided with a retainer (9a,22a,23a,33a,34a) or a substantially vertically projecting inlet (3a,3b,4c,4d,4e) as engaging means at upper and lower positions corresponding to said engaged means (9a,22a,23a,33a,34a) of said frame structure, wherein said panel (3,4) is mounted onto said frame structure so as to be checked in its longitudinal and lateral movement by engagement of said corresponding inlet (3a,3b,4c,4d,4e) and retainer (9a,22a,23a,33a,34a) at said vertically upper and lower positions; and
a hood (2) disposed so as to be opened and closed over said mounted panel (3,4), wherein said hood when closed suppresses said mounted panel (3,4) in its vertical movement
**characterized in that**
a vertical length of said vertically projecting inlet (3a,3b,4c,4d,4e) of said engaged or engaging means at the upper position is longer than a vertical length of said vertically projecting inlet (3a,3b,4c,4d,4e) of said engaged or engaging means at the lower position for ensuring a clearance. at said engaged or engaging means at said lower position during engagement of said engaged or engaging means at said upper position.

2. A panel mounting system of a vehicle as set forth in claim 1, wherein said frame structure includes a horizontal frame (8,9) defining the lower position of said frame structure and supporting an engine of the vehicle and and at least one upright frame (21,40) mounted on said horizontal frame (8,9) and defining the upper position of said frame structure.

3. A panel mounting system of a vehicle as set forth in claim 2, wherein said at least one upright frame (21,40) comprises an upright frame (21,21) disposed adjacent to a front end of the vehicle.

4. A panel mounting system of a vehicle as set forth in claim 2 or 3, wherein said at least one upright frame (21,40) comprises an upright frame (40) supporting a. dashboard (41).

5. A panel mounting system of a vehicle as set forth in claim 1, 2, 3 or 4, wherein
said engaged means on the upper position is a substantially vertically projecting pin (22a,23a,34a) on said frame structure of the vehicle and corresponding engaging means on said panel (3,4) is a hole (3a,4c,4d) into which said pin (22a,23a,34a) can be vertically inserted, and
said engaged means on the lower position is a substantially vertically projecting pin (3b,4e) on said panel (3,4) and corresponding engaging means on said frame structure is a hole (9a,33a) into which said pin (3b,4e) can be vertically inserted.

6. A panel mounting system of a vehicle as set forth in any one of claims 1 to 5, wherein a plurality of said engaged means on the upper position of said frame structure are disposed in a horizontal row.

7. A panel mounting system of a vehicle as set forth in any one of claims 1 to 6, wherein said panel comprises a side panel (4) respectively disposed under each of both left and right lower ends of said hood (2) when closed and/or a front panel (3) disposed under a front lower end of said hood . (2) when closed.

## Patentansprüche

1. Verkleidungsplattenmontagesystem für ein Fahrzeug mit :
einem im wesentlichen vertikal vorstehenden Einlaß (3a,3b,4c,4d,4e) oder einem Halteelement (9a,22a,23a,33a,34a) als Eingriffsmittel, das an jeder von vertikal oberen und unteren Positionen einer Rahmenstruktur (8,9,21,40) eines Fahrzeugs vorgesehen ist,
einer mit einem Halteelement (9a,22a,23a,33a,34a) oder einem im wesentlichen vertikal vorstehenden Einlaß (3a,3b,4c,4d,4e) als eingreifendes Mittel an oberen und unteren, dem Eingriffsmittel (9a,22a,23a,33a,34a) der Rahmenstruktur entsprechenden Positionen versehenen Verkleidungsplatte (3,4), wobei die Verkleidungsplatte (3,4) an der Rahmenstruktur so angebracht ist, dass sie in ihrer Longitudinal- und Lateralbewegung durch Eingriff des entsprechenden Einlasses (3a,3b,4c,4d,4e) und Halteelements (9a,22a,23a,33a,34a) an den vertikal oberen und unteren Positionen eingeschränkt ist, und
einer Haube (2) die so angeordnet ist, dass sie über der montierten Verkleidungsplatte (3,4) geöffnet und geschlossen werden kann, wobei die Haube, wenn sie geschlossen ist, die montierte Verkleidungsplatte (3,4) in ihrer Vertikalbewegung einschränkt,
**dadurch gekennzeichnet, dass**
eine vertikale Länge des vertikal vorstehenden Einlasses (3a,3b,4c,4d,4e) des Eingriffs- oder eingreifenden Mittels an der oberen Position länger ist als eine vertikale Länge des vertikal vorstehenden Einlasses (3a,3b,4c,4d,4e) des Eingriffs- oder eingreifenden Mittels an der unteren Position, um ein Spiel an dem Eingriffs- oder eingreifenden Mittel an der unteren Position während des Eingriffs des Eingriffs- oder eingreifenden Mittels an der oberen Position zu schaffen.

2. Verkleidungsplattenmontagesystem für ein Fahrzeug nach Anspruch 1, wobei die Rahmenstruktur einen Horizontalrahmen (8,9) aufweist, der die untere Position der Rahmenstruktur festlegt und einen Motor des Fahrzeugs haltert, und mindestens einen aufrechten Rahmen (21,40), der an dem Horizontalrahmen (8,9) angebracht ist, und die obere Position der Rahmenstruktur festlegt.

3. Verkleidungsplattenmontagesystem für ein Fahrzeug nach Anspruch 2, wobei der mindestens eine aufrechte Rahmen (21,40) einen angrenzend an ein Vorderende des Fahrzeugs angeordneten aufrechten Rahmen (21,21) umfasst.

4. Verkleidungsplattenmontagesystem für ein Fahrzeug nach Anspruch 2 oder 3, wobei der mindestens eine aufrechte Rahmen (21,40) einen eine Instrumenten- bzw. Armaturentafel (41) halternden aufrechten Rahmen (40) umfasst.

5. Verkleidungsplattenmontagesystem für ein Fahrzeug nach Anspruch 1, 2, 3 oder 4, wobei
das Eingriffsmittel an der oberen Position ein im wesentlichen vertikal vorstehender Zapfen bzw. Stift (22a,23a,34a) an der Rahmenstruktur des Fahrzeugs ist, und das entsprechende eingreifende Mittel an der Verkleidungsplatte (3,4) ein Loch (3a,4c,4d) ist, in das der Stift bzw. Zapfen (22a,23a,34a) vertikal eingesetzt werden kann, und
das Eingriffsmittel an der unteren Position ein im wesentlichen vertikal vorstehender Zapfen bzw. Stift (3b,4e) an der Verkleidungsplatte (3,4) ist, und das entsprechende eingreifende Mittel an der Rahmenstruktur ein Loch (9a,33a) ist, in das der Zapfen (3b,4e) vertikal eingesetzt werden kann,.

6. Verkleidungsplattenmontagesystem für ein Fahrzeug nach einem der Ansprüche 1 bis 5, wobei mehrere der Eingriffsmittel an der oberen Position der Rahmenstruktur in einer horizontalen Reihe angeordnet sind.

7. Verkleidungsplattenmontagesystem für ein Fahrzeug nach einem der Ansprüche 1 bis 6, wobei die Verkleidungsplatte eine Seitenplatte (4), die jeweils unter jedem von linken und rechten unteren Enden der Haube (2) angeordnet ist, wenn diese geschlossen ist, und/oder eine vordere Platte (3), die unter einem vorderen unteren Ende der Haube (2) angeordnet ist, wenn sie geschlossen ist, umfaßt.

## Revendications

1. Système de montage de panneau d'un véhicule comportant :
une entrée faisant saillie sensiblement verticalement (3a, 3b, 4c, 4d, 4e) ou un dispositif de retenue (9a, 22a, 23a, 33a, 34a) faisant office de moyens coopérés agencés dans chacune des positions verticalement supérieure et inférieure d'une structure de châssis (8, 9, 21, 40) d'un véhicule,
un panneau (3, 4) muni d'un dispositif de retenue (9a, 22a, 23a, 33a, 34a) ou d'une entrée faisant saillie sensiblement verticalement (3a, 3b, 4c, 4d, 4e) faisant office de moyens coopérants dans des positions supérieure et inférieure correspondant auxdits moyens coopérés (9a, 22a, 23a, 33a, 34a) de ladite structure de châssis, dans lequel ledit panneau (3, 4) est monté sur ladite structure de châssis pour être contrôlé dans son mouvement longitudinal et latéral par une coopération de ladite entrée (3a, 3b, 4c, 4d, 4e) correspondante et dudit dispositif de retenue (9a, 22a, 23a, 33a, 34a) dans lesdites positions verticalement supérieure et inférieure, et
un capot (2) disposé pour être ouvert et fermé au-dessus dudit panneau monté (3, 4), dans lequel ledit capot lorsqu'il est fermé bloque ledit panneau monté (3, 4) dans son mouvement vertical,
**caractérisé en ce qu'**une longueur verticale de ladite entrée verticalement en saillie (3a, 3b, 4c, 4d, 4e) desdits moyens coopérés ou coopérants dans la position supérieure est plus grande qu'une longueur verticale de ladite entrée verticalement en saillie (3a, 3b, 4c, 4d, 4e) desdits moyens coopérés ou coopérants dans la position inférieure pour garantir un jeu sur lesdits moyens coopérés ou coopérants dans ladite position inférieure pendant une coopération desdits moyens coopérés ou coopérants dans ladite position supérieure.

2. Système de montage de panneau d'un véhicule selon la revendication 1, dans lequel ladite structure de châssis inclut un châssis horizontal (8, 9) définissant la position inférieure de ladite structure de châssis et supportant un moteur du véhicule et au moins un châssis vertical (21, 40) monté sur ledit châssis horizontal (8, 9) et définissant la position supérieure de ladite structure de châssis.

3. Système de montage de panneau d'un véhicule selon la revendication 2, dans lequel ledit au moins un châssis vertical (21, 40) comporte un châssis vertical (21, 21) disposé adjacent à une extrémité avant du véhicule.

4. Système de montage de panneau d'un véhicule selon la revendication 2 ou 3, dans lequel ledit au moins un châssis vertical (21, 40) comporte un châssis vertical (40) supportant un tableau de bord (41).

5. Système de montage de panneau d'un véhicule selon la revendication 1, 2, 3 ou 4, dans lequel
lesdits moyens coopérés dans la position supérieure sont un axe faisant saillie sensiblement verticalement (22a, 23a, 34a) sur ladite structure de châssis du véhicule et les moyens coopérants correspondants sur ledit panneau (3, 4) sont un trou (3a, 4c, 4d) dans lequel ledit axe (22a, 23a, 34a) peut être inséré verticalement, et
lesdits moyens coopérés dans la position inférieure sont un axe faisant saillie sensiblement verticalement (3b, 4e) sur ledit panneau (3, 4) et les moyens coopérants correspondants sur ladite structure de châssis sont un trou (9a, 33a) dans lequel ledit axe (3b, 4e) peut être inséré verticalement.

6. Système de montage de panneau d'un véhicule selon l'une quelconque des revendications 1 à 5, dans lequel une pluralité desdits moyens coopérés dans la position supérieure de ladite structure de châssis sont disposés dans une rangée horizontale.

7. Système de montage de panneau d'un véhicule selon l'une quelconque des revendications 1 à 6, dans lequel ledit panneau comporte un panneau latéral (4) respectivement disposé au-dessous de chacune des extrémités inférieures gauche et droite dudit capot (2) lorsque celui-ci est fermé et/ou un panneau avant (3) disposé au-dessous d'une extrémité inférieure avant dudit capot (2) lorsque celui-ci est fermé.
